# EUROPEAN PATENT SPECIFICATION

(11) **EP 2 638 805 B1**
(45) Date of publication and mention of the grant of the patent: **06.08.2014**
(21) Application number: 12196880.4
(22) Date of filing: 13.12.2012
(51) Int. Cl.: A23B 4/044, A23B 4/052

(54) **A smoking device for smoking foodstuffs**
Räuchervorrichtung zum Räuchern von Nahrungsmitteln
Dispositif à fumer pour fumer des produits alimentaires

(30) Priority: 13.03.2012 IT RE20120017
(43) Date of publication of application: 18.09.2013
(73) Proprietor: Reber S.r.l., 42045 Luzzara (Reggio Emilia) (IT)
(72) Inventor: Re, Giorgio, 42016 Bagnolo in Piano, Reggio Emilia (IT)
(74) Representative: Corradini, Corrado

(56) References cited:
- WO-A1-2008/136711
- JP-A- 2011 160 784
- US-A- 4 690 045

## Description

### TECHNICAL FIELD

The present invention relates to a smoking device for smoking foods, such as meat, fish and the like.

In more detail, the invention relates to a device for cold-smoking foods, i.e. which is suitable for smoking without cooking the foods.

### PRIOR ART

As is known, smoking is a food preserving process which enables aromatising, colouring and conservation of the foods, while at the same time providing an antimicrobial effect, and sometimes modifying the consistency of foods, for example by modifying the protein constituents due to components present in the smoke.

Smoking devices are known which comprise a smoking chamber destined for housing the foods to be subjected to smoking and a combustion chamber in which a heat source is arranged, for example a gas or electric burner or a bed of hot wood coals or embers which burns flakes (also called chips) of aromatic wood, such that the fumes produced in the combustion chamber can then be conveyed to the smoking chamber and strike the foods contained therein, aromatising them.

Three different types of smoking processes are differentiated on the basis of the process temperature: the first type, known as cold-smoking, is particularly suitable for products which must not be modified, cooked or altered in their constituent properties, such as for example dairy products, sacked products or in any case another suitable food, and is performed at temperatures inside the smoking chamber comprised between 12 and 35°C; the second type is hot-smoking, in which the temperature inside the smoking chamber is comprised between 50 and 85°C and in which together with the smoking a cooking of the products is obtained; and a third type of smoking performed at an intermediate temperature (35-50°C), which is generally performed when it is necessary to activate the endogenous enzymes present in the foods and tenderise the food.

Smoking devices for hot-smoking exhibit, as a rule, the combustion chamber made directly internally of smoking chamber with the only detail of dividing the heat source or the naked flame from the overlying zone in which the foods to be smoked are contained, by means of a specially perforated screen which allows only the fumes released by the combustion of the aromatic wood scales to pass.

The devices for cold-smoking, on the other hand, exhibit the combustion chamber located externally of the smoking chamber and the chambers communicate through holes made in respective flanks that are destined to match up so as to convey the fumes generated in the combustion chamber into the smoking chamber.

As is known, the aesthetic and flavour qualities of the foods treated with heat sources of natural origin, such as for example wood embers, are decidedly superior to those treated with gas burners or electric heaters, as the aroma of the aromatic wood scales adds to the aroma of the wood that has produced the embers, giving the food a considerably more appreciable taste that is closer to the flavours obtained with traditional smoking techniques. However, for the smoking devices using a bed of very hot embers as a heat source for burning the aromatic wood scales, the regulation of the temperature of the smoking chamber is very complicated, and therefore the heat of the fumes, which is, as mentioned, a particularly delicate process parameter, as it has an effect on the state of the product.

If there is an excessive raising of the temperature in the smoking chamber due to an excess of the quantity of embers in the combustion chamber, the cold-smoking process can be compromised; on the other hand a too-small quantity of embers leads to having to repeat the smoking process, by topping-up operations to the embers, especially in smoking cycles that involve long times for the food in the smoking chamber.

WO2008136711 discloses a method for generating smoke from a liquid smoke condensate for preparing food inside a smoke housing, said smoke being generated in a first smoke generation housing having a channel to the smoke housing. The smoke temperature regulation is performed inside the smoke generating housing.

An aim of the present invention is to obviate the above-mentioned drawbacks in the prior art, with a solution that is simple, rational and relatively inexpensive.

The aims are attained by the characteristics of the invention as reported in the independent claims. The dependent claims delineate preferred and/or particularly advantageous aspects of the invention.

### DISCLOSURE OF THE INVENTION

In particular, the invention discloses a smoking device for smoking foods, which comprises:
at least a smoking chamber for containing food to be smoked,
at least a combustion chamber independent of the smoking chamber and provided with at least a heat source for generating a mass of gas for smoking and
conveyor means of the a flow of the smoking gas into the smoking chamber. According to the invention, the conveyor means comprise at least a variable-length conduit suitable for connecting the combustion chamber with the smoking chamber for regulating the temperature of the smoking gases conveyed into the smoking chamber.

Thanks to this solution, the temperature internally of the smoking chamber can easily be regulated as a function of the reciprocal distance between the smoking chamber and the combustion chamber, at the same time simply and easily enabling an abundant bed of embers to be used, which will therefore last for a good length of time, without cooking the foods to be cold-smoked. The conduit is advantageously modular and comprises a plurality of tubular sections fitted to one another.

In a further advantageous aspect of the invention, the combustion chamber comprises a brazier which is superiorly closed by a removable covering element, the conduit connecting openings realised respectively in the smoking chamber and in the covering element for the passage of the smoking gases from the combustion chamber to the smoking chamber.

### BRIEF DESCRIPTION OF THE DRAWINGS

Further characteristics and advantages of the invention will more fully emerge from a reading of the following description provided by way of nonlimiting example, with the aid of the figures illustrated in the appended drawings.

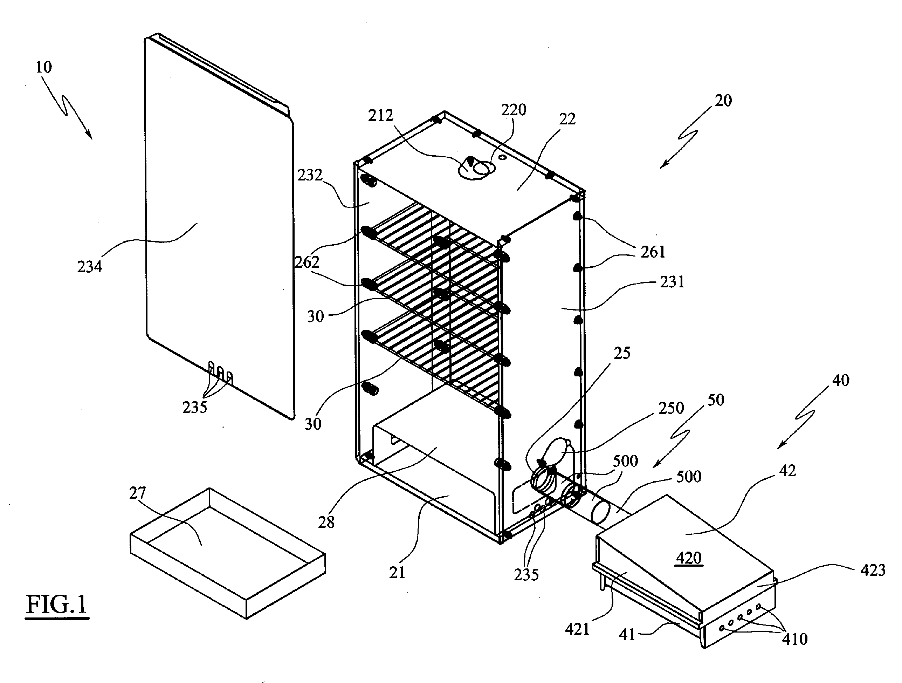

Figure 1 is an axonometric view of a smoking device according to the invention, in an open configuration.

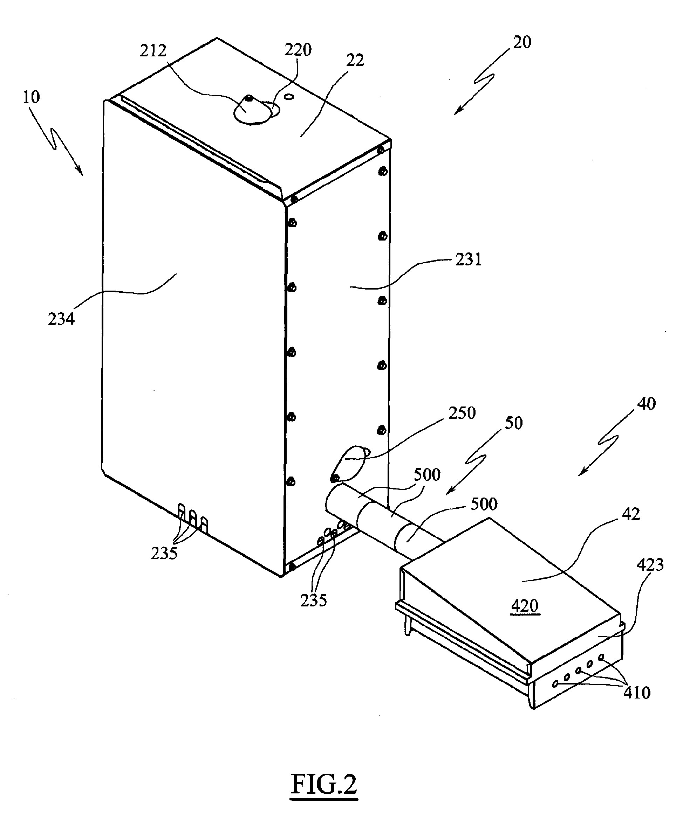

Figure 2 is an axonometric view of the smoking device of figure 1, in a closed configuration.

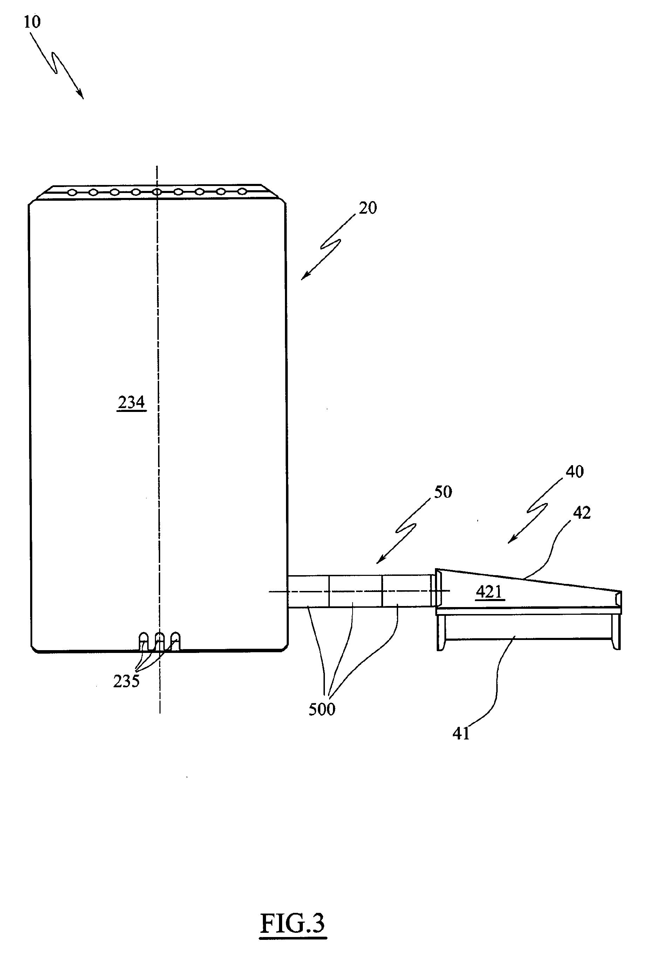

Figure 3 is a front view of the smoking device of figure 2.

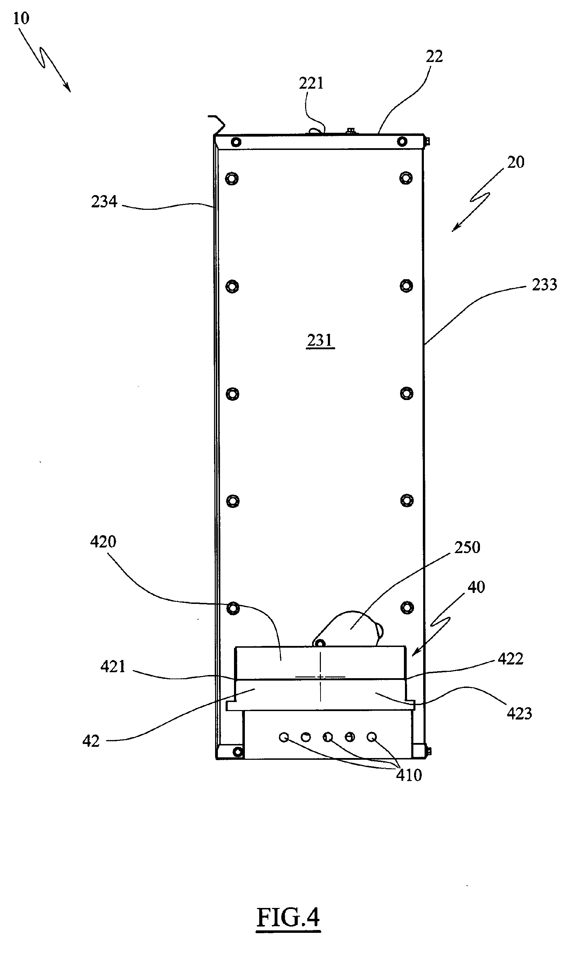

Figure 4 is a lateral view from the right of figure 3.

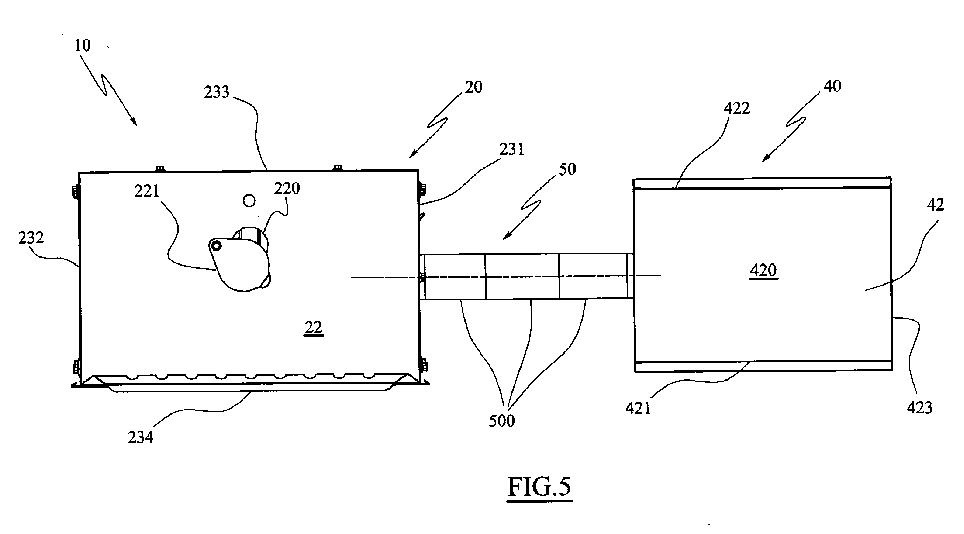

Figure 5 is a plan view from above of figure 3.

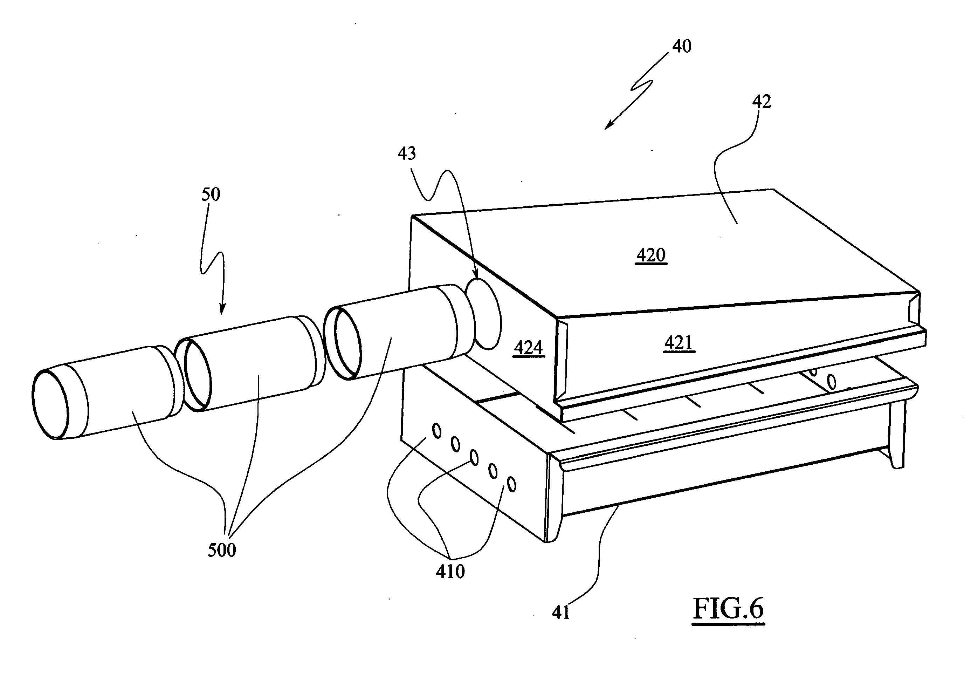

Figure 6 is an axonometric exploded view of a combustion chamber of the smoking device according to the invention.

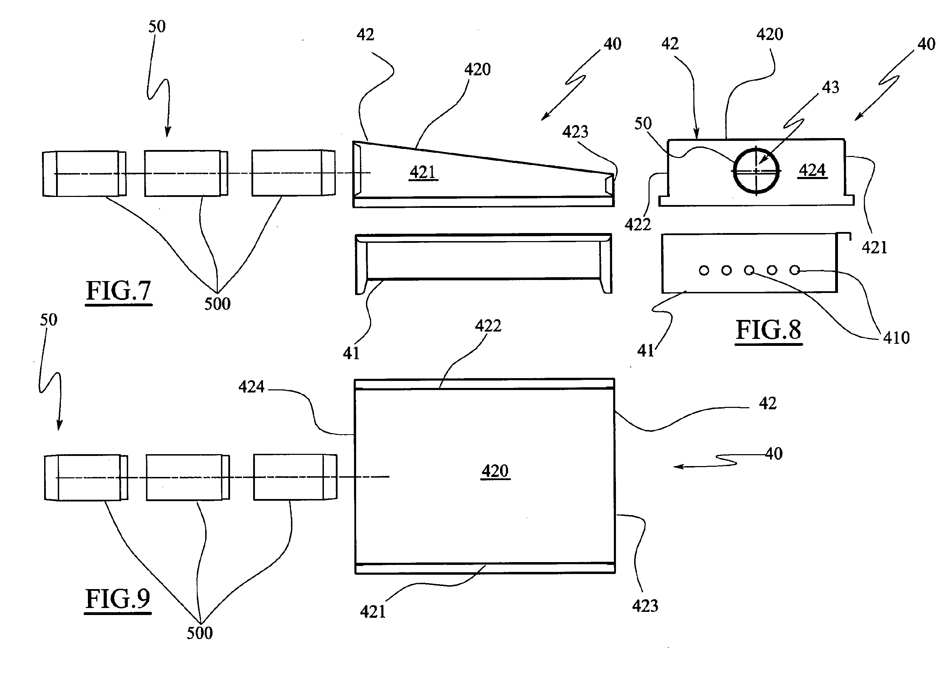

Figure 7 is a front view of figure 5.
Figure 8 is a lateral view from the left of figure 7.
Figure 9 is a plan view from above of figure 7.

### BEST WAY OF CARRYING OUT THE INVENTION

With particular reference to the figures, reference numeral 10 denotes in its entirety a smoking device for smoking foods such as meat, fish, meats, vegetables, dairy products, or similar food products.

The device 10 comprises a smoking chamber 20, which comprises a support structure, for example made of stainless steel, substantially box-shaped and parallelepiped, which is defined by a base wall 21, substantially quadrangular, rectangular in the example, a top wall 22 which is also rectangular, and three lateral walls, of which a right wall 231, a left wall 232 and a rear wall 233, fixed to one another such as to define an internal compartment 24 frontally open and destined to contain the foodstuffs to be smoked.

The front wall of the smoking chamber 20, therefore, defines an access opening which can be - as illustrated in the example - substantially as wide as the entire rear wall 233.

The access opening is destined to be closed by a hatch 234 slidably and/or removably associated to a pair of opposite walls, in the example the top wall 22 and to the base wall 21, such as to close the internal compartment 24 of the smoking chamber 20.

Some openings 235 (three in number in the figure) can be obtained in proximity of the lower base of the hatch 234, as well as of the side walls 231, 232.

A discharge outlet 220, for example a through hole, is realised on the top wall 22 and is suitable for conveying the fumes into the atmosphere.

The smoking chamber 20 comprises a first valve 221 associated to the top wall 22 and arranged such as to intercept the discharge mouth 220 in order to regulate the amplitude of the passage hole thereof.

In practice, the first valve 221 includes a plate hinged to the top wall 22 at a hinging axis perpendicular to the top wall itself and located offset with respect to the discharge outlet 220.

The plate is therefore activatable in rotation between a closed configuration, in which the plate is substantially superimposed on the discharge mouth, totally obstructing it, and at least an open configuration, in which it is dealigned in plan view, passing between the one and the other position through a plurality of intermediate positions in which the discharge mouth 22, open for the passage of the smoke, has a varying aperture relating to the angular position of the plate.

One of the side walls 231, 232 (in the figure the right lateral wall 231) affords an access mouth 25 at a zone proximal to the base wall 21, for example a through-hole formed in the right lateral wall.

The access mouth 25 can be intercepted by a second valve 250, located externally of the right lateral wall 231 and comprising a plate hinged to the wall in a completely identical way to the first valve 221 described above.

A first plurality of positioning shelves 261 is located on the right lateral wall 231, which shelves 261 are vertically aligned and equally spaced at a constant pitch.

A second plurality of positioning shelves 262 is located on the left lateral wall 232 which shelves 262 are vertically aligned and equally spaced at a constant pitch.

In practice, the positioning shelves 261 and 262 exhibit two-by-two shelves facing one another and at same heights.

A plurality of grills 30 can be rested on the positioning 261 and 262, which grills 30 are suitable for restingly supporting the food to be smoked.

In the example illustrated each positioning shelf 261, 262 comprises a pair of pins fixed to the respective lateral wall 231, 232 and aligned horizontally such as to define a substantially horizontal support surface for the grills 30.

Also, food in the smoking chamber 20 can be suspended by hooks, not shown, which can hook to the top wall 22 or to a cross member, ends of which are fixable to the lateral walls 231, 232.

The smoke chamber 20 lastly comprises a removable collection tray 27 that can be rested at the bottom of the chamber itself, for example on the inner surface of the base wall 21 or on a suitable support 28, in the example inverted C-shaped and provided with open areas on the flanks, such as to be arranged beneath the food to be smoked in order to collect any fat or liquids emanating from the food itself.

The collection tray 27, in particular, has a width that is substantially equal to the width in plan view of the internal chamber 24.

The device 10 further comprises a combustion chamber 40 located externally of the smoking chamber 20 and is distinct therefrom and independent thereof.

The combustion chamber 40 comprises a brazier 41 in which glowing embers are accommodated, which is provided with lateral ventilation slits 410 for the bed of embers contained therein.

The brazier 41 has, for example, a rectangular plan, slightly smaller than the plan dimensions of the internal chamber 24, so that it can be placed inside it, for example when the device 10 is not in use, in the compartment located below the support 28.

The combustion chamber 40 comprises a covering element 42 substantially shaped as a polyhedral dome open at the base and with a concavity thereof facing downwards.

In practice the covering element 42 comprises a front wall 421 and a rear wall 422 of substantially trapezoidal shape and a rectangular right lateral wall 423 (only in relation to the reference orientation in the figure) having a lower height than a left lateral wall 424, so that the upper wall 420 which closes the top of the covering element 42 is inclined with respect to the horizontal plane (rising from right to left in the figure) when the covering element is resting on the walls 421-424.

The covering element 42 has a rectangular plan is substantially complementary to the brazier 41, such as to support the walls thereof and superiorly close the brazier 41.

A through opening 43 is afforded on the left lateral wall 424, for example circular and having substantially identical dimensions to the dimensions of the access mouth 25, from which the fumes created in the combustion chamber 40 can exit.

In particular the device 10 comprises a conduit 50 having a variable length and being adjustable, an end of which is destined to be connected to the through-opening 43 and an opposite end thereof being connected to the access mouth 25, in practice connecting the combustion chamber 40 to the smoke chamber 20 for outflow of gas from the combustion chamber 40 to the smoking chamber.

In a preferred embodiment, the conduit 50 is modular and exhibits a plurality of tubular sections 500 each removably fixed at a head, for example by means of internal-external threads fashioned at the ends of each tubular portion 500.

The length of the conduit 50 in this case depends on the number of tubular sections 500 fixed to one another to construct the conduit 50.

The tubular portions 500 can be of the same length or be differently shaped according to requirements.

Alternatively, the conduit 50 can be of telescopic type (not shown in the figures), in which the tubular portions 500 are slidingly associated to each other in order to vary the length of the conduit 50 without intervening on the reciprocal fastening systems between the various tubular sections 500.

It is however possible for the conduit 50 to be of a bellows type, or another equivalent type suitable for varying a length thereof according to requirements.

Lastly, the device 10 comprises at least a temperature sensor, of a thermometer type, not shown because of known type, suitable for detecting the temperature inside the smoking chamber 20, which for example is associated to the door 234.

In the light of what is described above, the operation of the smoking device 10 for cold smoking is as follows.

Once the smoking chamber 20 is assembled, it is sufficient to place the food inside it, for example by resting it on the grills 30 or hooking it to the above-mentioned hooks.

Additionally, the collection tray 27 is positioned below the food to avoid fat from dripping onto the base wall 21.

Hot wood embers are then arranged or prepared in the brazier 41. For this operation it is not necessary to carefully batch the embers, as the brazier 41 is located externally of the smoking chamber 20 and is distanced therefrom such that the heat unleashed by the embers does not influence the internal heat of the smokig chamber 20.

Once the embers have been prepared in the brazier 41 they are covered with a layer of aromatic wood-flake, e.g. beech and oak in compressed flake form, without additives or adhesives. The compression of the flakes makes the smoke yield of the wood more effective.

Then the brazier 41 is covered using the covering element 42 and the through opening 43 is then connected to the access mouth 25 (keeping the second valve 250 open) of the smoking chamber 20 through the conduit 50. At this point, the smoke produced in the combustion chamber 40 flows into the smoking chamber 20 and strikes the foodstuffs, flavouring them.

By varying the opening of the discharge outlet 220 using the first valve 221 is possible to adjust the air draught according to requirements.

By means of the thermometer is then possible to monitor the temperature that develops internally of the smoking chamber 20 due to the passage of the fumes, so as to check that it does not exceed 35°C.

In the event it becomes necessary to adjust the temperature inside the smoking chamber, regardless of the amount and heat of the coals in the combustion chamber 40, the conduit 50 can be acted on, i.e. the conduit 50 can be lengthened or shortened, for example by increasing or decreasing the number of tubular sections 500 that make it up, so as to lengthen or shorten the path travelled by the fumes and, therefore respectively cool them or to maintain the temperature of the fumes higher.

In practice, the heat that develops in the smoking chamber 20 is dependent only on the heat of the fumes which pass through it and not on the heat which develops inside the combustion chamber 40 or on the heat which is transmitted by conduction between the combustion chamber 40 and the smoking chamber 20.

Advantageously, with a few simple operations it is possible to use the same device 10 for hot smoking processes, or as a barbecue for cooking food.

For instance, by positioning the brazier 41 full of hot coals, i.e., without the covering element 42, on the bottom of the smoking chamber 20, for example below the support 28 and the collection tray 27 above the same support, and closing the smoking chamber 20 with the hatch 234, a device is obtained that is suitable for hot-smoking, as the temperatures that develop internally of the smoking chamber 20 are decidedly greater than those prevoiusly described due to the presence of the brazier 41 directly internally of the internal chamber 24 of the smoking chamber.

To use the device 10 as barbecue, it is sufficient to remove the hatch 234, the collection tank 27 and the support 28, leaving the brazier 41 on the bottom of the smoking chamber 20 and therefore directly below the grills 30. The invention as it is conceived herein is susceptible to numerous modifications and variants, all falling within the scope of the inventive concept.

Further, all details can be replaced with other technically equivalent elements.

In practice the materials used, as well as the forms and dimensions, may be any according to requirements without thereby abandoning the protective scope of the appended claims.

## Claims

1. A smoking device (10) for smoking foods, which comprises:
at least a smoking chamber (20) for containing food to be smoked,
at least a combustion chamber (40) independent of the smoking chamber (20) and provided with at least a heat source for generating a mass of gas for smoking and
conveyor means of the a flow of the smoking gas into the smoking chamber,
**characterised in that** the conveyor means comprise at least a conduit (50) having a variable length and suitable for connecting the combustion chamber (40) with the smoking chamber (20) for regulating the temperature of the smoking gases conveyed into the smoking chamber itself.

2. The device (10) of claim 1, wherein the combustion chamber (40) is positioned externally of the smoking chamber (20) and is distanced therefrom.

3. The device (10) of claim 1, wherein the conduit (50) is of a modular type and comprises a plurality of tubular sections (500) fixed to one another.

4. The device (10) of claim 1, wherein the conduit (50) is of a telescopic type and comprises a plurality of tubular sections (500) slidably associated to one another.

5. The device (10) of claim 1, **characterised in that** it comprises at least a collecting tray (27) destined to be located below the food to be smoked.

6. The device (10) of claim 1, wherein the combustion chamber comprises a brazier (41) which is superiorly closed by a removable covering element (42), the conduit (50) connecting openings (25, 43) realised respectively in the smoking chamber (20) and in the covering element (42) for the passage of the smoking gases from the combustion chamber to the smoking chamber.

7. The device (10) of claim 1, **characterised in that** the smoking chamber (20) comprises at least a discharge mouth (220) of the smoking gases for conveying the smoking gases into an outside atmosphere.

8. The device (10) of claim 6, **characterised in that** it comprises at least a valve (221) for regulating an opening of the discharge mouth (220).

## Patentansprüche

1. Räuchervorrichtung (10) zum Räuchern von Nahrungsmitteln, die Folgendes umfasst:
mindestens eine Räucherkammer (20) zum Aufnehmen der zu räuchernden Nahrungsmittel,
mindestens eine Brennkammer (40), die von der Räucherkammer (20) unabhängig und mit mindestens einer Wärmequelle ausgestattet ist, um eine Gasmasse zum Räuchern zu erzeugen und
Beförderungsmittel eines Stroms des Räuchergases in die Räucherkammer,
**dadurch gekennzeichnet, dass** die Beförderungsmittel mindestens eine Leitung (50) mit einer variablen Länge umfassen, die zum Verbinden der Brennkammer (40) mit der Räucherkammer (20) geeignet sind, um die Temperatur des zur Räucherkammer zu befördernden Räuchergases an sich zu regulieren.

2. Vorrichtung (10) nach Anspruch 1, wobei die Brennkammer (40) außerhalb der Räucherkammer (20) angeordnet und von dieser beabstandet ist.

3. Vorrichtung (10) nach Anspruch 1, wobei die Leitung (50) modularer Art ist und mehrere röhrenförmige Abschnitte (500) umfasst, die aneinander fixiert sind.

4. Vorrichtung (10) nach Anspruch 1, wobei die Leitung (50) teleskopischer Art ist und mehrere röhrenförmige Abschnitte (500) umfasst, die gleitfähig miteinander verbunden sind.

5. Vorrichtung (10) nach Anspruch 1, **dadurch gekennzeichnet, dass** sie mindestens eine Auffangwanne (27) umfasst, die dafür vorgesehen ist, sich unter den zu räuchernden Nahrungsmitteln zu befinden.

6. Vorrichtung (10) nach Anspruch 1, wobei die Brennkammer ein Kohlenbecken (41) umfasst, das oben durch ein abnehmbares Abdeckelement (42) verschlossen ist, wobei die Leitung (50) Öffnungen (25, 43) verbindet, die in der Räucherkammer (20) beziehungsweise im Abdeckelement (42) zum Leiten der Räuchergase von der Brennkammer zur Räucherkammer realisiert sind.

7. Vorrichtung (10) nach Anspruch 1, **dadurch gekennzeichnet, dass** die Räucherkammer (20) mindestens eine Ablassöffnung (220) der Räuchergase zum Befördern der Räuchergase zu einer Außenatmosphäre umfasst.

8. Vorrichtung (10) nach Anspruch 6, **dadurch gekennzeichnet, dass** sie mindestens ein Ventil (221) zum Regulieren einer Öffnung der Ablassöffnung (220) umfasst.

## Revendications

1. Dispositif de fumage (10) pour fumer des aliments, comprenant :
au moins une chambre de fumage (20) destinée à contenir un aliment à fumer,
au moins une chambre de combustion (40) indépendante de la chambre de fumage (20) et pourvue d'au moins une source de chaleur pour générer une masse de gaz de fumage, et
un moyen de convoyage du flux de gaz de fumage dans la chambre de fumage,
**caractérisé en ce que** le moyen de convoyage comprend au moins un conduit (50) à longueur variable et adapté pour connecter la chambre de combustion (40) à la chambre de fumage (20) de manière à réguler la température des gaz de fumage convoyés dans la chambre de fumage elle-même.

2. Dispositif (10) selon la revendication 1, dans lequel la chambre de combustion (40) est positionnée à l'extérieur de la chambre de fumage (20) et est espacée par rapport à celle-ci.

3. Dispositif (10) selon la revendication 1, dans lequel le conduit (50) est de type modulaire et comprend une pluralité de sections tubulaires (500) fixées les unes aux autres.

4. Dispositif (10) selon la revendication 1, dans lequel le conduit (50) est de type télescopique et comprend une pluralité de sections tubulaires (500) associées entre elles de manière coulissante.

5. Dispositif (10) selon la revendication 1, **caractérisé en ce qu'**il comprend au moins un plateau de collecte (27) destiné à être agencé en dessous de l'aliment à fumer.

6. Dispositif (10) selon la revendication 1, dans lequel la chambre de combustion comprend un brasier (41) fermé dans sa partie supérieure par un élément de couvercle amovible (42), le conduit (50) connectant des ouvertures (25, 43) réalisées respectivement dans la chambre de fumage (20) et dans l'élément de couvercle (42) pour le passage des gaz de fumage depuis la chambre de combustion vers la chambre de fumage.

7. Dispositif (10) selon la revendication 1, **caractérisé en ce que** la chambre de fumage (20) comprend au moins un orifice d'échappement (220) des gaz de fumage pour convoyer les gaz de fumage vers une atmosphère extérieure.

8. Dispositif (10) selon la revendication 6, **caractérisé en ce qu'**il comprend au moins une valve (221) pour réguler l'ouverture de l'orifice d'échappement (220).
